# EUROPÄISCHE PATENTSCHRIFT

(11) **EP 0 581 398 B1**
(45) Veröffentlichungstag und Bekanntmachung des Hinweises auf die Patenterteilung: **23.10.1996**
(21) Anmeldenummer: 93250169.5
(22) Anmeldetag: 16.06.1993
(51) Int. Cl.: B65G 47/38

(54) **Behälter und Vorrichtung zu ihrer Entleerung**
Load-carriers and device for emptying them
Porte-charges et dispositif pour leur vidange

(30) Priorität: 30.07.1992 DE 4225491
(43) Veröffentlichungstag der Anmeldung: 02.02.1994
(73) Patentinhaber: MANNESMANN Aktiengesellschaft, 40027 Düsseldorf (DE)
(72) Erfinder: Becker, Klaus, W-5802 Wetter (DE); Ostholt, Rüdiger, W-5802 Wetter (DE)
(74) Vertreter: Presting, Hans-Joachim, Dipl.-Ing.

(56) Entgegenhaltungen:
- DE-A- 1 481 336
- GB-A- 2 002 314
- GB-A- 2 073 691

## Beschreibung

Die Erfindung betrifft einen Behälter zum Transportieren von Stückgütern, insbesondere Gepäckstücken, auf einer Förderbahn gemäß dem Oberbegriff des Anspruchs 1 und eine Vorrichtung zum Entleeren derartiger Behälter.

Aus der EP 0 077 554 B1 ist eine Vorrichtung zum Entleeren von mit Stückgut beladenen Behältern bekannt, die im Verlauf einer vorzugsweise als Rollenförderer ausgebildeten Förderbahn angeordnet ist. Somit ist die Förderbahn in eine Zuführtransporteinrichtung vor und einen Leergutförderer hinter der Entleervorrichtung aufgeteilt. An die Entleervorrichtung angrenzend und quer zur Förderbahn ist in Entleerrichtung ein Gurtförderer zum Weitertransport des aus den Behältern entleerten Stückgutes angeordnet. Die Entleervorrichtung besteht im wesentlichen aus einer Kippvorrichtung, um am Entleerort die Behälter quer zur Förderbahn und in Richtung des Gurtförderers um etwa 45° zu kippen, und aus einer Hubvorrichtung mit einem Stempel. Dieser ist von untend urch schlitzförmige Durchbrüche in der Bodenebene des Behälters einfahrbar, wodurch das Stückgut über den Rand des gekippten Behälters angehoben wird, so daß es in Entleerrichtung auf den Gurtförderer abrutscht. Der Behälter wird in der geneigten Stellung von an der Entleervorrichtung angeordneten Rollen im Bereich seiner Seitenwand abgestützt. Hierdurch wird ein Abrutschen des Behälters in Entleervorrichtung verhindert. Nach erfolgter Entleerung schwenkt die Kippvorrichtung wieder in die waagerechte Position und der leere Behälter wird in Richtung des anschließenden Leergutförderers transportiert.

Diese Entleervorrichtung erweist sich als nachteilig, da in dem Behälterboden eine Vielzahl von Durchbrüchen vorgesehen werden müssen, um den von einer Hubvorrichtung angetriebenen Stempel während des Entladevorganges einfahren zu können. Die Anordnung der Schlitze schwächt einerseits den Behälterboden und führt andererseits zu höheren Herstellkosten des Behälters. Außerdem ist diese Entleervorrichtung nur geeignet, auf der Vorrichtung ruhende Behälter zu entleeren. Daher ist der Durchsatz der Förderbahn abhängig von der Geschwindigkeit, mit der die Behälter entladen werden.

Der Erfindung liegt die Aufgabe zugrunde, einen Behälter der gattungsgemäßen Art und eine Vorrichtung zum Entleeren derartiger Behälter so auszubilden, daß mit konstruktiv einfachen Mitteln ein Entleeren während der Transportbewegung des Behälters ermöglicht wird.

Diese Aufgabe wird hinsichtlich des Behälters erfindungsgemäß durch die Merkmale des kennzeichnenden Teils des Anspruchs 1 gelöst. Vorteilhafte Ausgestaltungen des Behälters sind in den Unteransprüchen 2 bis 8 und 16 angegeben.
Die Ausbildung der Entleerungsvorrichtung geht aus den Ansprüchen 10 bis 15 hervor.

Der mit der Erfindung erzielte wesentliche Vorteil besteht darin, daß durch die Trennung des Behälters in einen oberen Teil zur Aufnahme des Stückguts und einen unteren Teil zur Übertragung der Antriebs- und Kippkräfte sowie die schalenförmige Ausbildung des oberen Teils des Behälters auf eine Anordnung einer zusätzlichen Hubvorrichtung mit einem Stempel zum Entleeren des Behälters verzichtet werden kann. Die Ausbildung des oberen Teils des Behälters als Wandabschnitt eines gedachten Hohlzylinders, dessen Enden in Fahrtrichtung gesehen jeweils vorn und hinten mit einer Seitenwand verschlossen sind, hat den Vorteil, daß das Stückgut, da keine Seitenwand in Richtung des Abzweigförderers vorhanden ist, leicht abgekippt werden kann und in Förderrichtung ein Verrutschen des Stückgutes durch die auftretenden Anfahr- bzw. Bremsbeschleunigungen durch die Seitenwände erfolgreich verhindert wird. Die Anordnung einer in Förderrichtung verlaufenden Fahrnut in die ansonsten ebene Auflagefläche des unteren Teils des Behälters ermöglicht es, den Behälter auf einer Reihe von Tragrollen, die im Bereich der Entleervorrichtung in Förderrichtung gesehen hintereinander und voneinander beabstandet sind, zu transportieren. Die ebenen Bereiche der Auflagefläche gestatten, den Behälter auch auf üblichen Rollen- bzw. Bandförderern zu transportieren. Die spezielle Anordnung der Tragrollen in Verbindung mit der Fahrnut ermöglicht eine besonders konstruktiv einfache Ausgestaltung der Kippvorrichtung durch einen doppelarmigen Hebel, der um eine in Förderrichtung verlaufende Schwenkachse verschwenkbar ist und an dessen Enden jeweils Führungsrollen für den Behälter angeordnet sind. Die Führungselemente, die insbesondere als übereinander angeordnete Paare von Rollen und Gleitschienenstücken ausgebildet sind und jeweils untereinander einen Spalt bilden, gewährleisten, daß der Behälter, während er auf den Tragrollen verfährt oder um diese gekippt wird, sicher geführt wird. Die spezielle Anpassung der Profile der Fahrnut und der Laufflächen der Tragrollen ermöglicht einen verschleißarmen Betrieb der Entleervorrichtung`. Die Anordnung mehrerer doppelarmiger Hebel der Kippvorrichtung in Fahrtrichtung hintereinander, deren Abstand untereinander oder zwischen der anschließenden Förderbahn geringer als die Länge des Behälters ist, führt zu einer Entleervorrichtung, die in Anpassung an die Fördergeschwindigkeit der Förderbahn ein Entleeren der Behälter während der Fahrbewegung ermöglicht. Besonders vorteilhaft erweist sich die Anordnung von Verbindungsleisten aus schwingungsabsorbierendem Material, wie z.B. Gummi, zwischen dem unteren und oberen Teil des Behälters, da hierdurch erfolgreich die Weiterleitung von Körperschall vermieden wird.

Desweiteren können diese Verbindungsleisten etwaige Fertigungstoleranzen zwischen dem Ober- und Unterteil ausgleichen. Die Verwendung von Kunststoff, insbesondere GFK als Werkstoff führt zu einer Leichtbauweise des Behälters und somit einer geringen trägen Masse, die eine ökonomische Auslegung des Schwenkantriebes ermöglicht. Desweiteren erweist sich als vorteilhaft, zwischen der Ober- und Unterseite des Behälters und oberhalb der Fahrnut einen Informationsträger anzuordnen, da diese Lage vor äußeren Einwirkungen gut geschützt ist. Die Anordnung dieses Informationsträgers zentral in der Mitte des Behälters ermöglicht, diesen unabhängig von der Förderrichtung einzusetzen.

Nachfolgend wird die Erfindung anhand eines Ausführungsbeispiels näher erläutert. Es zeigen:
- Figur 1: eine Seitenansicht einer im Verlauf eines Gurtförderers angeordneten Vorrichtung zum Entleeren von Behältern,
- Figur 2: eine Draufsicht auf Figur 1,
- Figur 3: eine vergrößerte Vorderansicht von Figur 1 gemäß der Schnittlinie I-I,
- Figur 4: Entleervorrichtung gemäß Figur 3 in gekippter Stellung,
- Figur 5: perspektivische Ansicht des Behälters.

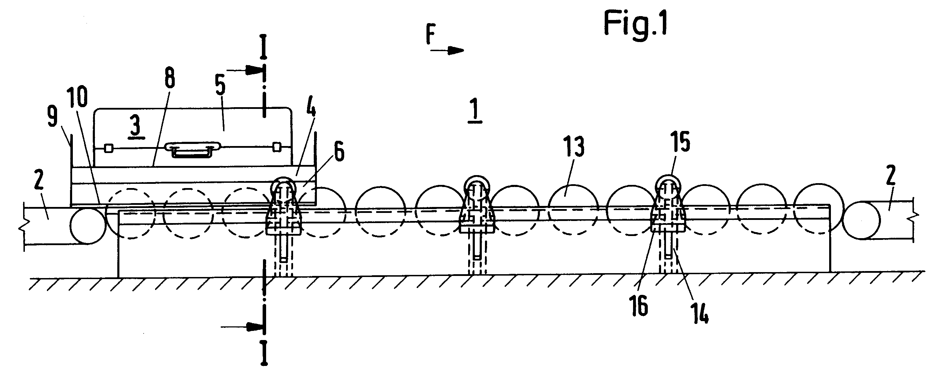

Figur 1 stellt eine Seitenansicht der Vorrichtung zum Entleeren von Behältern dar. Die Entleervorrichtung 1 ist im Verlauf einer Förderbahn 2 mit der Förderrichtung F angeordnet, die hier als Gurtförderer ausgebildet ist. Die Förderbahn 2 dient zum Zu- bzw. Abführen der Behälter 3 zu bzw. von der Entleervorrichtung 1. Der Behälter 3 besteht im wesentlichen - bei einem auf einer waagerechten Förderbahn ruhenden Behälter gesehen - aus einem oberen Teil 4 zur Aufnahme von Stückgut 5 und einem damit verbundenen unteren Teil 6 zur Übertragung der Antriebs- und Kippkräfte. Der obere Teil 4 ist derart bemessen, daß ein Gepäckstück wie z.B. ein Koffer Platz findet.

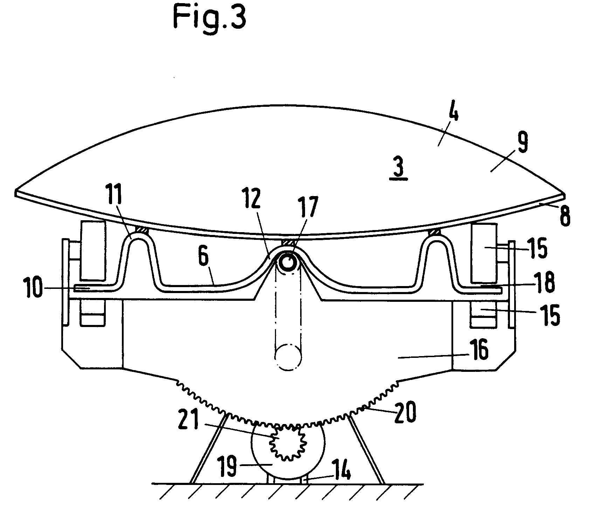

Dieser Aufbau des Behälters ist aus der Figur 3 zu entnehmen, die eine Vorderansicht gemäß der Schnittlinie I-I in Figur 1 darstellt; wobei der Behälter 3 jedoch unbeladen ist. Der obere Teil 4, der zur Aufnahme des Stückgutes 5 dient, weist einen Boden 8 auf, der derart gekrümmt ist, daß von der Mitte des Behälters 3 ausgehend der Boden 8 quer zur Förderrichtung F jeweils ansteigt. In Förderrichtung F und von oben gesehen wird der konkav gekrümmte Boden 8 von zwei an die Krümmung des Bodens 8 angepaßten Seitenwänden 9 vorn und hinten begrenzt. Der Behälter 3 weist somit keine parallel zur Förderrichtung F angeordneten Seitenwände auf. Der untere Teil 6 des Behälters 3, der zur Übertragung der Antriebs- und Kippkräfte dient, besteht im wesentlichen aus einer ebenen Auflagefläche 10, die durch drei in Förderrichtung F verlaufende Nuten 11, 12 in vier Bereiche aufgeteilt ist. Die in der Mitte des Behälters angeordnete Fahrnut 12 dient als Schiene für Tragrollen 13. Die beiden äußeren Nuten 11 haben die Aufgabe den Behälter 3 zu versteifen und können auch als Führungsnuten für eventuell im Verlauf der Entleervorrichtung 1 oder der Förderbahn 2 angeordnete Geradführungsleisten Verwendung finden. Außerdem ist auf den nach oben gewölbten Außenseiten der Nuten 11, 12 der Boden 8 befestigt. Die in der Nut 12 abrollenden Tragrollen 13 sind um jeweils eine horizontale Achse drehbar an einem Stützelement 14 gelagert, das sich am Flur abstützt. Die beiden seitlichen Enden der Auflageflächen 10 des unteren Teils 6 dienen zur Führung des Behälters 3. Die Führung erfolgt über Führungselemente 15, die aus Paaren von Gleitschienenstücken und von Führungsrollen gebildet sind, die in Ruhestellung der Entleervorrichtung 1 um horizontale Achsen drehbar sind. Die Führungsrollen sind jeweils über den Gleitschienenstücken unter Bildung eines Spaltes 18 angeordnet. In diesem Spalt 18 werden die seitlichen Enden der Auflageflächen 10 des Behälters 3 je nach Kippzustand von oben durch die Führungsrollen oder von unten durch die Gleitschienenstücke geführt. Die Führungselemente 15 sind jeweils an den Enden eines doppelarmigen Hebels 16 gelagert. Die Enden des Hebels 16 sind in Ruhestellung der Entleervorrichtung in einer horizontalen Ebene angeordnet. Desweiteren ist der Hebel 16 um eine in Förderrichtung F ausgerichtete Schwenkachse 17 von einem Schwenkantrieb 19 kippbar. Die Lage des Mittelpunkts der Schwenkachse 17 stimmt weitestgehend mit dem Krümmungsmittelpunkt der Lauffläche einer senkrecht zur Förderrichtung F an der höchsten Stelle geschnittenen Tragrolle 13 überein. Der Schwenkantrieb 19 ist vorzugsweise als Servomotor ausgebildet, der mit seiner Drehachse parallel zur Schwenkachse 17 ausgerichtet und an einem Stützelement 14 befestigt ist. Auf die Drehachse des Schwenkantriebs 19 ist ein Zahnrad 21 aufgeschoben und befestigt, das mit einem Zahnkranz 20 im Eingriff steht, der auf der der Schwenkachse 17 abgewandten Seite des Hebels 16 angeordnet ist. Der Krümmungsmittelpunkt des Zahnkranzes 20 fällt mit dem Mittelpunkt der Schwenkachse 17 zusammen.

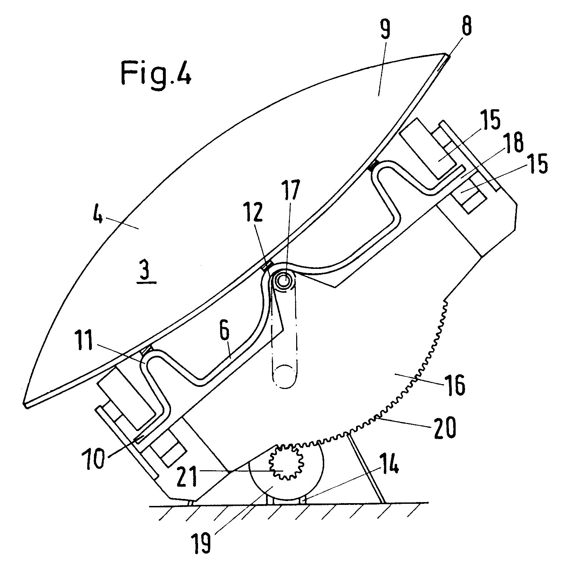

Die Figur 4 zeigt die Entleervorrichtung 1 gemäß Figur 3 in um etwa 40^{o} gekippter Darstellung. Es ist ersichtlich, daß durch die Kippbewegung des Behälters 3 die Führungsfläche in der Nut 12 für die Tragrolle 13 entgegen der Verschwenkrichtung leicht versetzt ist, wobei diese Versetzung durch die Abstimmung des Krümmungsradius der Lauffläche der Tragrolle 13, dem Krümmungsradius der Nut 12 und der Anordnung des Mittelpunktes der Schwenkachse 17 geringgehalten wird. Der Krümmungsradius der Nut 12 stimmt im Scheitelbereich mit dem der Lauffläche der Tragrollen 13 überein, erweitert sich jedoch dann in Richtung der Tragrollen 13 beidseitig, um ein Verschwenken des Behälters 3 um die Tragrolle 13 zu ermöglichen, ohne an den Flanken der Tragrolle 13 zu schleifen.

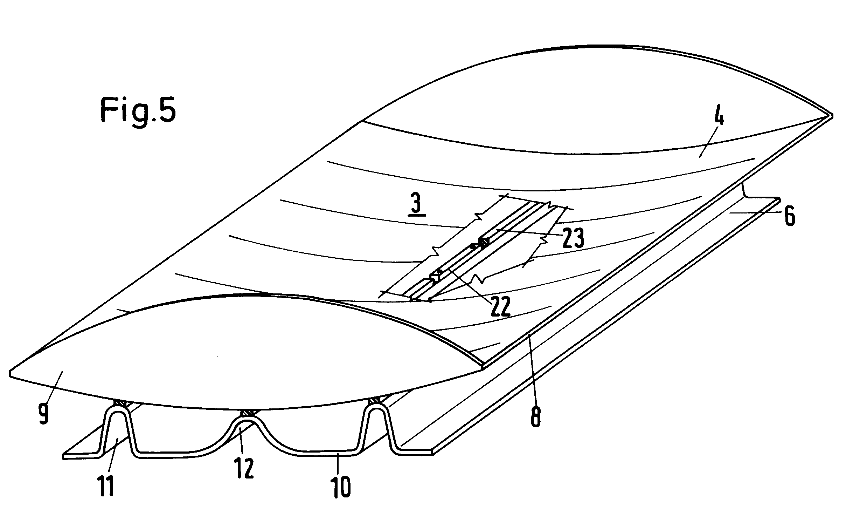

In Figur 5 ist eine perspektivische Ansicht des Behälters 3 dargestellt. Der Behälter 3 weist quer zur Förderrichtung F, das heißt in Entleerrichtung keine Seitenwände auf, da durch die nach außen hin ansteigende Wölbung des Bodens 8 des Behälters 3 das Stückgut 5 sicher transportiert werden kann. Des weiteren läßt sich deutlich die viergeteilte Auflagefläche 10, die durch die in Förderrichtung F angeordneten Nuten 11, 12 ersehen. Außerdem ist die schienenförmige Ausbildung der nach außen weisenden Auflageflächen 10, die zur Führung des Behälters 3 und zur Übertragung der Kippkräfte auf den Behälter 3 dienen, zu entnehmen. Desweiteren ist der Boden 8 des Behälters 3 in der zeichnerischen Darstellung mit einem Ausbruch versehen, um unter dem Boden angeordneten Informationsträger 22 darzustellen. Der Informationsträger 22 ist oberhalb der Nut 12 angeordnet und in deren Längsrichtung ausgerichtet. Der Informationsträger ist vorzugsweise als Chip ausgeführt, der die Informationen über das zu transportierende Stückgut abspeichert. Ferner ist ersichtlich, daß der obere Teil 4 des Behälters 3 über Verbindungsleisten 23, die insbesondere aus Gummi hergestellt sind, mit dem unteren Teil 4 verbunden sind. Die Verbindungsleisten 23 verlaufen oberhalb und parallel zu den Nuten 11, 12. Nur die Verbindungsleiste 23 auf der Nut 12 ist in der Mitte unterbrochen um einen Aufnahmeplatz für den Informationsträger 22 zu schaffen.

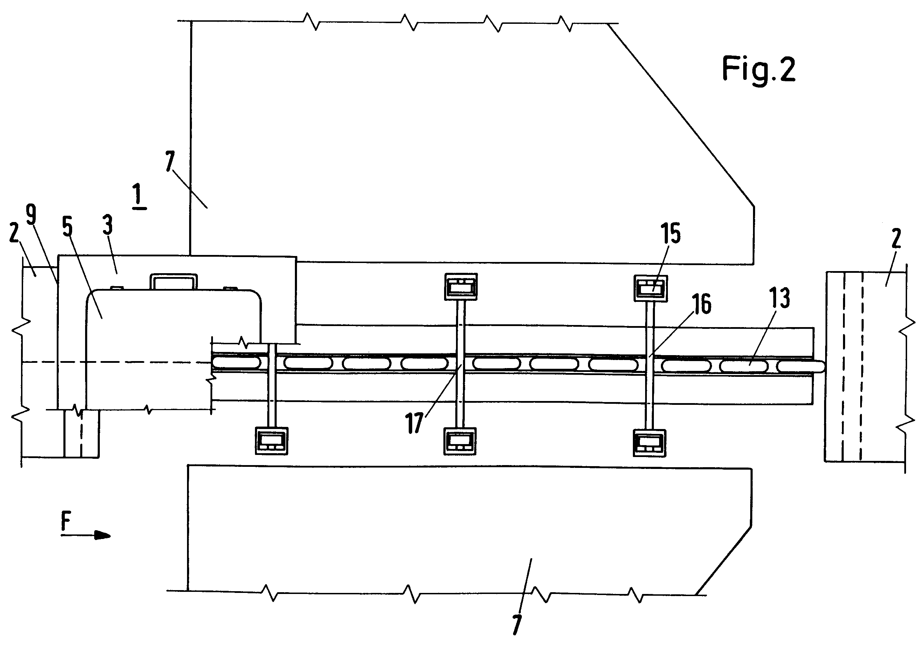

Anhand der Figuren 1 bis 5 wird anschließend die Funktionsweise der Vorrichtung zum Entleeren der Behälter beschrieben. Ein Behälter 3, der mit Stückgut, insbesondere einem Gepäckstück, beladen ist, wird auf einer insbesondere als Bandförderer ausgebildeten Förderbahn 2 in Richtung der Entleervorrichtung 1 transportiert. Der Behälter 3 stützt sich während des Transportes auf der Förderbahn 2 über seine viergeteilte ebene Auflagefläche 10 ab. Diese Ausbildung der Auflagefläche 10 ermöglicht ebenfalls einen Transport des Behälters 3 auf Rollenbahnen. Sollen die Behälter 3 nun an einem bestimmten Ort entleert werden, kann die Förderbahn 2 unterbrochen und eine Entleervorrichtung 1 angeordnet werden. Ein auf der Förderbahn 2 an die Entleervorrichtung 1 herannahender Behälter 3 überfährt eine nicht dargestellte, unterhalb der Förderbahn 2 und unmittelbar vor der Entleervorrichtung 1 angeordnete Schreib- und Leseeinheit. Diese Schreib- und Leseeinheit wertet den an dem Behälter 3 angeordneten Informationsträger 22, der die Daten über das zur Zeit transportierte Stückgut 5 enthält, induktiv aus und gibt an die Entleervorrichtung 1 die Information weiter, ob der Behälter 3 entleert werden soll oder nicht. Anschließend verläßt der Behälter 3 die Förderbahn 2 und fährt mit seiner mittleren Nut 12 auf die ortsfest angeordneten Tragrollen 13, die in Förderrichtung F hintereinander und beabstandet zueinander angeordnet sind. Der Krümmungsradius der Lauffläche der Tragrolle 13 und die Ausformung der Nut 12 sind aufeinander abgestimmt. Der Behälter 3 fährt nun mit dem äußeren Bereich der Auflagefläche 10 zwischen die Spalte. 18 der Führungselemente 15 ein. In dem Moment hat der Behälter 3 die Förderbahn 2 noch nicht verlassen, um ein sicheres Einfahren in die Führungselemente 15 zu gewährleisten. Anschließend verläßt der Behälter 3 die Förderbahn 2 und kann, wenn ein Entleeren des Behälters 3 erwünscht wird, wahlweise in Fahrtrichtung F gesehen nach links und rechts gekippt werden, um das Stückgut 5 auf eine anschließende Abzweigbahn 7 (s. Figur 2) abzugeben, die quer oder schräg zur Förderrichtung F und unterhalb der Förderbahn 2 angeordnet ist. Der Kippvorgang des Behälters 3 wird durch ein Verschwenken des Hebels 16 um bis zu etwa 45^{o} ermöglicht. Die Kippbewegung des Hebels 16, die über den schwenkantrieb 19 erfolgt, bewirkt, daß durch die an den Enden des Hebels 16 angeordneten Führungselemente 15 der Behälter 3 um die Tragrollen 13 geschwenkt wird. In Förderrichtung F gesehen folgen zwei weitere Hebel 16, deren Abstand zueinander jeweils kleiner als die Länge des Behälters 3 ist. Die jeweils aufeinander folgenden Hebel 16 verschwenken synchron miteinander, so daß der noch im Eingriff mit dem ersten Hebel 16 stehende Behälter 3 einwandfrei in die Führungselemente 15 des nachfolgenden Hebels 16 einfahren kann. In dem Augenblick, in dem der Behälter 3 die Führungselemente 15 des ersten Hebels verläßt, schwenkt dieser sofort wieder in die horizontale Ruhestellung zurück, um einen nachfolgenden Behälter 3 aufnehmen zu können. Nach übergabe des Behälters 3 in die Führungselemente 15 des dritten Hebels 16, verschwenkt dieser ebenfalls in die waagerechte Lage zurück, um den Behälter an die anschließende horizontale Förderbahn 2 übergeben zu können.

In dem Ausführungsbeispiel ist in Anpassung an die Fördergeschwindigkeit der Förderbahn 2 die zum Entleeren notwendige Kippbewegung auf drei Hebel 16 verteilt worden. Es ist jedoch auch möglich, bei Herabsetzung der Fördergeschwindigkeit den Entleervorgang auch mit nur einem Hebel 16 zu bewerkstelligen oder mit mehreren Hebeln eine höhere Entleergeschwindigkeit zu erreichen.

## Patentansprüche

1. Behälter zum Transportieren von Stückgütern, insbesondere von Gepäckstücken auf einer Förderbahn, in deren Verlauf eine Vorrichtung zum Entleeren des Stückguts aus dem Behälter auf einen angrenzenden Abzweigförderer angeordnet ist, die Tragrollen und Führungselemente für die Behälter sowie eine Kippvorrichtung für die Behälter mit einem Schwenkantrieb zum Verschwenken der Behälter quer zur Förderrichtung der Förderbahn und in Richtung des Abzweigförderers aufweist,
dadurch gekennzeichnet,
daß der Behälter (3) aus einem oberen Teil (4) zur Aufnahme des Stückguts (5) und einem unteren Teil (6) zur Übertragung der Antriebskräfte von den Tragrollen (13) und der Kippkräfte von den Führungselementen (15) besteht, daß der obere Teil (4) im wesentlichen aus einem Boden (8) besteht, der von dessen Mitte ausgehend jeweils quer zur Förderrichtung (F) ansteigt und daß der untere Teil (6) im wesentlichen aus einer ebenen Auflagefläche (10) besteht.

2. Behälter nach Anspruch 1,
dadurch gekennzeichnet,
daß der Boden (8) in Förderrichtung (F) und von oben gesehen konkav gekrümmt ausgebildet ist.

3. Behälter nach Anspruch 1,
dadurch gekennzeichnet,
daß der Boden (8) des Behälters (3) die Form eines Wandabschnittes eines gedachten Hohlzylinders aufweist, dessen Längsachse in Fahrtrichtung (F) ausgerichtet ist und der Boden (8) vorn und hinten jeweils mit einer Seitenwand (9) abgeschlossen ist.

4. Behälter nach einem der Ansprüche 1 bis 3,
dadurch gekennzeichnet,
daß in die ebene Auflagefläche (10) des Behälters (3) eine in Förderrichtung (F) verlaufende Fahrnut (12) für die Tragrollen (13) eingearbeitet ist.

5. Behälter nach Anspruch 4,
dadurch gekennzeichnet,
daß parallel zur Fahrnut (12) beidseitig je eine weitere Nut (11) in der Auflageflache (10) angeordnet ist.

6. Behälter nach Anspruch 5,
dadurch gekennzeichnet,
daß die Tiefe der Nuten (11) und der Fahrnut (12) derart gewählt ist, daß der schalenförmige Boden (8) auf den Außenseiten der Nuten (11) und der Fahrnut (12) aufliegt und der Boden (8) an den Außenseiten der Nuten (11, 12) befestigt ist.

7. Behälter nach Anspruch 6,
dadurch gekennzeichnet,
daß jeweils zwischen der Oberseite der Nuten (11) und der Fahrnut (12) und der Unterseite des Bodens (8) eine Verbindungsleiste (23) angeordnet ist, die aus einem schwingungsabsorbierenden Werkstoff hergestellt ist.

8. Behälter nach einem oder mehreren der Ansprüche 1 bis 7,
dadurch gekennzeichnet,
daß der obere Teil (4) und der untere Teil (6) des Behälters (3) aus Kunststoff hergestellt ist.

9. Vorrichtung zum Entleeren eines Behälters nach einem oder mehreren der Ansprüche 4 bis 8,
dadurch gekennzeichnet,
daß die Tragrollen (13), die in die Fahrnut (12) greifen, in Förderrichtung (F) gesehen hintereinander und voneinander beabstandet angeordnet sind und die Tragrollen (13) um quer zur Förderrichtung (F) angeordnete und horizontale Achsen drehbar, sowie ortsfest angeordnet sind.

10. Vorrichtung nach Anspruch 9
dadurch gekennzeichnet,
daß die Kippvorrichtung für den Behälter (3) aus einem doppelarmigen Hebel (16) gebildet ist, der um eine in Förderrichtung (F) verlaufende Schwenkachse (17) schwenkbar ist, die zwischen zwei Tragrollen (13) angeordnet ist, an den beiden Enden des Hebels (16) jeweils Führungselemente (15) für die seitlichen Enden der Auflagefläche (10) angeordnet sind.

11. Vorrichtung nach Anspruch 10,
dadurch gekennzeichnet,
daß die Führungselemente (15) als Paare von übereinander angeordneten Rollen und Gleitschienenstücken ausgebildet sind, die jeweils einen Spalt (18) zur Führung der seitlichen Enden der Auflagefläche (10) bilden.

12. Vorrichtung nach einem oder mehreren der Ansprüche 9 bis 11,
dadurch gekennzeichnet,
daß die Lauffläche der Tragrollen (13) kreisbogenförmig ausgebildet ist und die Fahrnut (12) sich bei waagerechtem Behälter (3) gesehen komplementär mit der anliegenden Lauffläche der Tragrollen (13) ergänzt und der anschließende Bereich der Fahrnut (12) sich erweitert.

13. Vorrichtung nach einem oder mehreren der Ansprüche 9 bis 12,
dadurch gekennzeichnet,
daß der Mittelpunkt der Schwenkachse (17) auf einer Höhe mit dem Krümmungsmittelpunkt der an der höchsten Stelle senkrecht geschnittenen Lauffläche der einer Tragrolle (13) liegt.

14. Vorrichtung nach einem oder mehreren der Ansprüche 9 bis 13,
dadurch gekennzeichnet,
daß mehrere Hebel (16) in Fahrtrichtung (F) hintereinander angeordnet sind.

15. Vorrichtung nach einem oder mehreren der Ansprüche 9 bis 14,
dadurch gekennzeichnet,
daß der Abstand zwischen den benachbarten Hebeln (16) bzw. zwischen den Hebeln (16) und der angrenzenden Förderbahn (2) geringer ist als die Länge des Behälters (3).

16. Behälter nach einem oder mehreren der Ansprüche 1 bis 8,
dadurch gekennzeichnet,
daß zwischen dem Boden (8) und dem unteren Teil (6) des Behälters (3) sowie in Förderrichtung (F) und Entleerrichtung gesehen in der Mitte des Behälters (3) ein Informationsträger (22) zur Speicherung der Daten des Stückgutes (5) angeordnet ist.

## Claims

1. Container for transporting individual articles, in particular pieces of luggage on a conveyor track, in the course of which a device for emptying the container of the individual articles and depositing them on an adjacent branch conveyor is disposed, which device comprises support rollers and guide elements for the containers as well as a tilting device for the containers with a swivel drive for swivelling the containers transversely to the conveying direction of the conveyor track and in the direction of the branch conveyor,
characterised in that the container (3) consists of an upper part (4) for holding the individual articles (5) and a lower part (6) for transmitting the drive forces from the support rollers (13) and the tilting forces from the guide elements (15), that the upper part (4) essentially consists of a base (8) which rises from its centre in each case transversely to the conveying direction (F), and that the lower part (6) essentially consists of a plane bearing surface (10).

2. Container according to claim 1,
characterised in that, viewed in the conveying direction (F) and from above, the base (8) is curved in a concave manner.

3. Container according to claim 1,
characterised in that the base (8) of the container (3) has the shape of a wall section of an imaginary hollow cylinder, the longitudinal axis of which extends in the direction of travel (F) and the base (8) of which is terminated by a respective side wall (9) at the front and back.

4. Container according to one of claims 1 to 3,
characterised in that a running groove (12), which extends in the conveying direction (F), for the support rollers (13) is worked into the plane bearing surface (10) of the container (3).

5. Container according to claim 4,
characterised in that an additional groove (11) is disposed in the bearing surface (10) parallel to the running groove (12) on both sides thereof.

6. Container according to claim 5,
characterised in that the depth of the grooves (11) and of the running groove (12) is selected such that the shell-shaped base (8) lies on the outer sides of the grooves (11) and of the running groove (12), and the base (8) is secured to the outer sides of the grooves (11, 12).

7. Container according to claim 6,
characterised in that a respective connecting strip (23), which is made of a vibration-absorbing material, is disposed between the top side of the grooves (11) and the running groove (12) and the underside of the base (8).

8. Container according to one or more of claims 1 to 7,
characterised in that the upper part (4) and the lower part (6) of the container (3) are made of plastic.

9. Device for emptying a container according to one or more of claims 4 to 8,
characterised in that, viewed in the conveying direction (F), the support rollers (13), which engage in the running groove (12), are disposed one behind the other in a spaced, stationary manner and such that they can rotate about horizontal axes disposed transversely to the conveying direction (F).

10. Device according to claim 9,
characterised in that the tilting device for the container (3) is formed from a double-armed lever (16) which can swivel about a swivel pin (17) which extends in the conveying direction (F) and is disposed between two support rollers (13), while guide elements (15) for the lateral ends of the bearing surface (10) are disposed at both ends of the lever (16).

11. Device according to claim 10,
characterised in that the guide elements (15) are formed as pairs of superimposed rollers and slide rail pieces which in each case form a gap (18) for guiding the lateral ends of the bearing surface (10).

12. Device according to one or more of claims 9 to 11,
characterised in that the contact surface of the support rollers (13) is in the form of a circular arc and, with the container (3) viewed horizontally, the running groove (12) is complemented by the abutting contact surface of the support rollers (13), and the adjacent region of the running groove (12) widens.

13. Device according to one or more of claims 9 to 12,
characterised in that the centre point of the swivel pin (17) is on a level with the centre of curvature of the contact surface, which is cut vertically at the highest point, of one support roller (13).

14. Device according to one or more of claims 9 to 13,
characterised in that a plurality of levers (16) are disposed one behind the other in the direction of travel (F).

15. Device according to one or more of claims 9 to 14,
characterised in that the distance between the adjacent levers (16) or between the levers (16) and the adjacent conveyor track (2) is shorter than the length of the container (3).

16. Container according to one or more of claims 1 to 8,
characterised in that, viewed in the conveying direction (F) and the emptying direction, an information carrier (22) for storing data relating to the individual articles (5) is disposed between the base (8) and the lower part (6) of the container (3).

## Revendications

1. Conteneur pour transporter des marchandises de détail, en particulier des bagages, sur une voie de transport, dans le trajet de laquelle est agencé un dispositif pour vider la marchandise de détail du conteneur sur un transporteur dérivateur adjacent, et comportant des galets porteurs et des éléments de guidage pour les conteneurs, ainsi qu'un dispositif de basculement pour les conteneurs comprenant un servomoteur à fraction de tour pour pivoter les conteneurs tranzversalement à la direction de transport de la voie de transport et en direction du transporteur dérivateur,
caractérisé en ce que le conteneur (3) est constitué d'une partie supérieure (4) pour recevoir la marchandise de détail (5) et d'une partie inférieure (6) pour transmettre les forces d'entraînement des galets porteurs (13) et les forces de basculement des éléments de guidage (15), en ce que la partie supérieure (4) est constituée essentiellement d'un fond (8) qui, partant du centre, croît à chaque fois transversalement à la direction de transport (F), et en ce que la partie inférieure (6) est constituée essentiellement d'une face de support plane (10).

2. Conteneur selon la revendication 1,
caractérisé en ce que le fond (8) est cintré, en direction de transport (F) et vu de dessus, de façon concave.

3. Conteneur selon la revendication 1,
caractérisé en ce que le fond (8) du conteneur (3) présente la forme d'un tronçon de paroi d'un cylindre creux imaginaire, dont l'axe longitudinal est orienté en direction de roulement (F), et le fond (8) est fermé, à l'avant et à l'arrière, à chaque fois par une paroi latérale (9).

4. Conteneur selon l'une des revendications 1 à 3,
caractérisé en ce qu'une gorge de roulement (12) s'étendant en direction de transport (F), pour les galets porteurs (13), est pratiquée dans la face de support plane (10) du récepteur (3).

5. Conteneur selon la revendication 4,
caractérisé en ce que, parallèlement à la gorge de roulement (12), dans la face de support (10), est pratiquée des deux côtés, à chaque fois, une gorge intermédiaire (11) .

6. Conteneur selon la revendication 5,
caractérisé en ce que la profondeur des gorges (11) et de la gorge de roulement (12) est choisie de sorte que le fond (8) en forme de bol repose sur les surfaces externes des gorges (11) et de la gorge de roulement (12), et le fond (8) est fixé sur les faces externes des gorges (11,12).

7. Conteneur selon la revendication 6,
caractérisé en ce qu'une tige de liaison (23) qui est réalisée en un matériau absorbant les vibrations, est agencée à chaque fois entre la face supérieure des gorges (11) et de la gorge de roulement (12) et la face inférieure du fond (8).

8. Conteneur selon l'une ou plusieurs des revendications 1 à 7,
caractérisé en ce que la partie supérieure (4) et la partie inférieure (6) du conteneur (3) sont réalisées en matière synthétique.

9. Dispositif pour vider un conteneur selon l'une ou plusieurs des revendications 4 à 8,
caractérisé en ce que les galets porteurs (13) qui agissent dans la gorge de roulement (12), sont agencés les uns derrière les autres en direction de transport (F) et sont écartés les uns de autres, et les galets porteurs (13) sont agencés à poste fixe et de manière à pouvoir tourner autour d'axes horizontaux agencés transversalement à la direction de transport (F).

10. Dispositif selon la revendication 9,
caractérisé en ce que le dispositif de basculement pour le conteneur (3) est formé d'un levier (16) à double bras, qui peut être pivoté autour d'un axe de pivotement (17) s'étendant en direction de transport (F) et agencé entre deux galets porteurs (13), et aux deux extrémités du levier (16) sont agencés à chaque fois des éléments de guidage (15) pour les extrémités latérales de la face de support (10).

11. Dispositif selon la revendication 10,
caractérisé en ce que les éléments de guidage (15) sont formés par des paires de galet et de pièce à glissière, agencés l'un au-dessus de l'autre et formant à chaque fois une fente (18) pour le guidage des extrémités latérales de la face de support (10).

12. Dispositif selon l'une ou plusieurs des revendications 9 à 11,
caractérisé en ce que la face de course des galets porteurs (13) est réalisée en forme d'arc de cercle et la gorge de roulement (12) se complète, pour un conteneur (3) vu horizontalement, de façon complémentaire à la face de course adjacente des galets porteurs (13) et la zone suivante de la gorge de roulement (12) s'étend.

13. Dispositif selon l'une ou plusieurs des revendications 9 à 12,
caractérisé en ce que le centre de l'axe de pivotement (17) est situé à hauteur du centre de cintrage de la face de course, coupée orthogonalement à l'endroit le plus élevé, de l'un des galets porteurs (13).

14. Dispositif selon l'une ou plusieurs des revendications 9 à 13,
caractérisé en ce que plusieurs leviers (16) sont agencés les uns derrière les autres en direction de roulement (F).

15. Dispositif selon l'une ou plusieurs des revendications 9 à 14,
caractérisé en ce que l'écartement entre les leviers adjacents (16) ou entre les leviers (16) et la voie de transport adjacente (2) est plus faible que la longueur du conteneur (3).

16. Conteneur selon l'une ou plusieurs des revendications 1 à 8,
caractérisé en ce qu'entre le fond (8) et la partie inférieure (6) du conteneur (3), ainsi que, vu en direction de transport (F) et en direction de vidange, au centre du conteneur (3), est agencé un support d'information (22) pour stocker des données de la marchandise de détail (5).
